# EUROPÄISCHE PATENTSCHRIFT

(11) **EP 1 646 566 B1**
(45) Veröffentlichungstag und Bekanntmachung des Hinweises auf die Patenterteilung: **09.09.2009**
(21) Anmeldenummer: 04763089.2
(22) Anmeldetag: 03.07.2004
(51) Int. Cl.: B65D 35/08, B29D 23/20, B29C 45/00, B65D 35/14

(54) **VERFAHREN ZUR HERSTELLUNG EINER TUBE**
METHOD FOR THE PRODUCTION OF A TUBE
PROCEDE DE PRODUCTION D'UN TUBE

(30) Priorität: 22.07.2003 DE 10333160
(43) Veröffentlichungstag der Anmeldung: 19.04.2006
(73) Patentinhaber: Fischbach KG Kunststoff-Technik, 51766 Engelskirchen (DE)
(72) Erfinder: HELMENSTEIN, Achim, 51766 Engelskirchen (DE)
(74) Vertreter: Selting, Günther
(86) Internationale Anmeldenummer: PCT/EP2004/007274
(87) Internationale Veröffentlichungsnummer: WO 2005/019053

(56) Entgegenhaltungen:
- WO-A-92/00224
- DE-A- 2 461 786
- DE-A- 19 703 316
- DE-C- 4 318 014
- DE-U- 8 024 411
- FR-A- 2 630 409
- US-A- 3 260 777
- PATENT ABSTRACTS OF JAPAN Bd. 014, Nr. 155 (M-0954), 26. März 1990 (1990-03-26) -& JP 02 016019 A (SATO SHIYOUSAN:KK), 19. Januar 1990 (1990-01-19)
- PATENT ABSTRACTS OF JAPAN Bd. 2003, Nr. 02, 5. Februar 2003 (2003-02-05) & JP 2002 293097 A (YOSHINO KOGYOSHO CO LTD), 9. Oktober 2002 (2002-10-09) -& DATABASE WPI Week 200330 Derwent Publications Ltd., London, GB; AN 2003-304062 XP002306658 & JP 2002 293097 A 9. Oktober 2002 (2002-10-09)
- DATABASE WPI Week 197927 Derwent Publications Ltd., London, GB; AN 1979-49921b XP002306659 -& JP 54 065684 A 26. Mai 1979 (1979-05-26)
- PATENT ABSTRACTS OF JAPAN Bd. 1998, Nr. 01, 30. Januar 1998 (1998-01-30) -& JP 09 225959 A (DAINIPPON PRINTING CO LTD), 2. September 1997 (1997-09-02)

## Beschreibung

Die Erfindung betrifft ein Verfahren zur Herstellung einer Tube mit zusammendrückbarer Umfangswand aus Weichkunststoff mit einem E-Modul von unter 750 MPa, insbesondere mit einem E-Modul von unter 450 MPa.

Es ist bekannt, Tuben aus Kunststoff herzustellen. Hierzu kann das Extrusionsblasverfahren benutzt werden, bei dem das Werkstück in einer Blasform aus Kunststoff einstückig hergestellt wird. Es wird zuerst ein plastisch verformbarer Kunststoffschlauch in eine Blasform hineinextrudiert und dann Luft in die mit dem Schlauch geschlossene Blasform gedrückt, wodurch der Kunststoff sich gegen die Formwand legt und dort abkühlt und erstarrt. Die verbreitetste Art der Tubenherstellung benutzt ein Verfahren, bei dem von einem extrudierten Schlauch die gewünschten Längenabschnitte abgeschnitten werden, die anschließend mit einem Tubenkopfstück verbunden werden. Dieses Verfahren erfordert einen relativ hohen Aufwand, da die Tube zweiteilig hergestellt wird und anschließend Kopfstück und Schlauch verbunden bzw. angeformt werden.

Das Extrusionsblasverfahren hat hingegen eine geringere Mengenausbeute pro Anlage und gilt als ungenauer im Prozess und der Darstellung der Artikelgeometrie.

DE 43 18 014 C1 (Fischbach) beschreibt die Herstellung von Kartuschen zur Aufnahme plastischer Massen. Solche Kartuschen bestehen aus einem starren zylindrischen Kartuschenkörper, der einen Kolben enthält, welcher zum Auspressen der Masse vorgeschoben wird. Solche Kartuschen bestehen aus hartem bzw. steiferem Kunststoff (hier genannt Hartkunststoff) und sie sind formstabil, weil sie ihre zylindrische Form während des Gebrauchs und des Ausdrückens der Masse beibehalten müssen.

In DE 24 61 786 ist ein Verfahren zum Spritzziehen von Tuben beschrieben, bei dem in einer Spritzgießform ein Tubenrohling mit einer Hohlform, einem Kern und einer Kopfform erzeugt wird. Während der Tubenrohling in der Kopfform eingespannt ist, wird die Hohlform über dem Kern zurückgezogen, wodurch ein Recken des Tubenrohlings in Längsrichtung erfolgt. Dann wird die Hohlform wieder an die Kopfform herangeschoben. Es folgt ein Öffnen der Kopfform und anschließend wird der Kern mit dem darauf sitzenden Tubenrohling zurückgezogen. Schließlich erfolgt das Entformen des Tubenrohlings dadurch, dass dieser von dem Kern abgestreift wird.

Der Erfindung liegt die Aufgabe zugrunde, ein Verfahren zur Herstellung einer flexiblen Tube anzugeben, das eine schnelle und kostengünstige Tubenherstellung ermöglicht.

Die Lösung dieser Aufgabe erfolgt erfindungsgemäß mit den im Patentanspruch 1 angegebenen Merkmalen. Hiernach weist das Verfahren zur Herstellung einer Tube aus Weichkunststoff die folgenden Schritte auf:
- Einstückiges Spritzgießen eines Tubenrohlings mit Tubenkörper, Tubenschulter und Tubenauslass unter Verwendung einer Hohlform, eines Kernes und einer Kopfform,
- Entformen des Tubenrohlings durch Herausziehen des Kernes unter Festhalten des Tubenrohlings an der Kopfform, und Zurückziehen der Hohlform,
- Freigeben des Tubenrohlings durch die Kopfform,
- Flachdrücken und Verschließen des offenen Endes des Tubenkörpers.

Das erfindungsgemäße Verfahren ermöglicht die Herstellung einer Tube in einem einzigen Teil, das in einem Spritzgießvorgang einstückig hergestellt wird. Dieses Verfahren ist mit kurzer Taktzeit durchführbar und erlaubt die Herstellung hoch maßhaltiger Tuben mit einer normalen Spritzgießmaschine. Das Verfahren eignet sich insbesondere für die Massenproduktion von Tuben. Das Verfahren orientiert sich generell an Verfahren, wie sie für die Herstellung von starren Kartuschen angewendet werden und beispielsweise beschrieben sind in DE 43 18 014 C1 (Fischbach) und DE 197 03 316 A1 (Fischbach). Allerdings besteht ein wesentlicher Unterschied im Verfahren zur Herstellung von Tuben im Vergleich zur Herstellung von Kartuschen darin, dass das offene Ende der Tube nach der Befüllung flachgedrückt und beispielsweise durch Verschweißen verschlossen wird. Bei der Herstellung von starren Kartuschen werden diese nach der Befüllung mit einem zusätzlichen Kolben verschlossen, welche bei der späteren Applizierung des Produktes als Ausdrückkolben verwendet werden kann. Oder das offene Ende der Kartusche muss durch einen zusätzlichen Deckel oder eine zusätzliche Membrane verschlossen werden. Ebenso können einige Verfahrensschritte zur Herstellung von Kartuschen nicht unverändert für die Herstellung von Tuben angewandt werden, weil der für Tuben benutzte Weichkunststoff nach der Formgebung in der Spritzgießform eine große Klebeneigung hat. Dadurch besteht die Gefahr des Haftenbleibens an der Spritzgießform. Eine andere Eigenschaft des Weichkunststoffs besteht oftmals darin, dass dieser sich stärker an die Hohlform anlehnt als ein Hartkunststoff. Dies kann an der durch die geringere Wanddicke resultierenden geringeren Schwindung liegen oder auch am veränderten Formfüllverhalten. Ebenfalls ist die Festigkeit des Weichkunststoffes im Allgemeinen geringer als die Festigkeit des Hartkunststoffes. Dies verursacht zusammen mit der relativ geringen Wanddicke des Tubenkörpers eine insgesamt relativ geringe Festigkeit der Tube bei der Entformung aus dem Spritzgießwerkzeug. Es sind also besondere Maßnahmen zum Abziehen der Hohlform und des Kernes von dem Tubenrohling erforderlich.

Eine Möglichkeit der Verringerung der Klebeneigung besteht darin, dass zwischen den Kern und die Hohlform ein Blatt oder eine daraus geformte Hülse eingelegt und zur Anlage an dem Kern oder der Hohlform gebracht wird. Dieses Blatt oder die Hülse bildet die Außenfläche oder die Innenfläche der herzustellenden Tube und wird vor dem Einspritzvorgang in das Spritzgießwerkzeug eingelegt. Das Blatt oder die Hülse können auch besondere Gleiteigenschaften haben, so dass es nicht an der Oberfläche des Kernes bzw. der Hohlform festklebt. Ebenfalls ist es möglich, Blätter oder Hülsen zu verwenden, die gezielte Barriereeigenschaften aufweisen gegenüber Gasen oder Wasserdampf. Oder es werden Blätter oder Hülsen verwendet, welche eine höhere chemische Beständigkeit gegen das für die Tube vorgesehene Füllgut haben. Weiterhin ist auch möglich, Blätter oder Hülsen zu verwenden, welche bereits an der Oberfläche eine Bedruckung wie ein Etikett oder eine Dekoroberfläche mit Strukturen oder verschiedenen Materialien, wie Stoffe oder Textilien, aufweisen. Dadurch kann man Oberflächen mit einer erwünschten Griffigkeit auf der Tube durch Einlegen einer solchen mit diesen Eigenschaften versehenen Hülse oder eines Blattes erzeugen. Auch kann das Blatt oder die Hülse nur einen Teilbereich der Außenfläche oder der Innenfläche abdecken oder sich auch bis in den Bereich der Tubenschulter erstrecken.

Eine andere Maßnahme der Verhinderung des Anhaftens des Tubenrohlings an dem Kern besteht darin, dass der Kern eine Blasleitung enthält, die Luft zwischen den Tubenrohling und den Kern zur Erleichterung des Entformens leitet. Dabei tritt vorzugsweise die Luft durch einen Schlitz aus, dessen Breite so gering ist, dass der flüssige Kunststoff nicht in den Schlitz eindringen kann. Ebenfalls wäre es möglich, den Schlitz für den Luftaustritt durch eine axiale Relativbewegung eines Kernsegmentes zu vergrößern. Die aus dem Schlitz herausgedrückte Luft hebt den Tubenrohling von dem Kern ab und erleichtert das Zurückziehen des Kernes bei dem Entformungsvorgang. Hier kann es von Vorteil sein, die Luftzufuhr bereits nach Abschluss der Formfüllphase zu starten.

Eine andere Möglichkeit das Entformen zu erleichtern besteht darin, dass eine an der Hohlform vorgesehene Entformungsschräge größer gemacht wird als eine an dem Kern vorgesehene Entformungsschräge. Je größer die Entformungsschräge ist, umso leichter ist das Zurückziehen des entsprechenden Formteils von dem festgehaltenen Tubenrohling. Dadurch, dass die Entformungsschräge der Hohlform größer ist als die Entformungsschräge des Kernes, wird erreicht, dass die Hohlform von dem Tubenrohling abgezogen werden kann, obwohl dieser noch stark an der Innenoberfläche der Hohlform anhaftet und nur noch der Tubenkopf vorne fest in Position der Backen gehalten wird. Der Begriff Entformungsschräge ist nicht notwendigerweise auf eine Schräge mit konstanter Steigung beschränkt. Vielmehr können auch variierende Steigungsprofile vorhanden sein. Generell wird die Entformungsschräge durch die Differenz der Durchmesser über einzelne Längenabschnitte der Hohlform bzw. des Kernes bis hin zu den beiden Enden der Hohlform bzw. des Kernes bestimmt. Je größer diese Durchmesserdifferenz pro Längenabschnitt ist, umso größer ist die Entformungsschräge.

Eine weitere Möglichkeit des Verhinderns des Anhaftens des Kunststoffs an der Spritzgießform besteht in der Verwendung einer Hohlform bzw. eines Kernes, welche eine haftmindernde Gleitbeschichtung tragen.

Die genannten Verfahrenshilfen zur Verbesserung der Entformbarkeit von Tuben könne auch miteinander kombiniert werden.

Das Verfahren kann in der Weise durchgeführt werden, dass in einer ersten Einspritzphase der Kern oder ein Teil davon an der Kopfform in einem Zentrierbereich zwischen Ringschulter und Tubenauslass durch konisch zentrierende Stege abgestützt wird und in einer Nachfüllphase der Kern oder ein Teil davon von dem Zentrierbereich entfernt gehalten wird, um die während der Einspritzphase von den Stegen freigehaltenen Bereiche nachzufüllen.

Eine alternative Ausführungsform des Verfahrens sieht vor, dass das Spritzgießen durch Anspritzen an den ringförmigen Tubenauslass oder die Tubenschulter oder durch das Tubengewinde erfolgt. In diesem Fall muss ein zweistufiges Verfahren unter Herstellung zentrierender Stege nicht erforderlich sein. Vielmehr kann das Spritzgießverfahren mit einem Injektionsvorgang ohne Relativbewegung eines zentrierenden Kernes durchgeführt werden, um.Tuben mit offenem Auslass herzustellen. Es ist jedoch auch hier möglich, ein zweistufiges Verfahren mit einem zentrierenden Kern durchzuführen, wobei auch dieser dann in der Nachfüllphase entfernt gehalten wird, um geschlossene Tuben herzustellen.

Im Folgenden werden unter Bezugnahme auf die Zeichnungen Ausführungsbeispiele der Erfindung näher erläutert. Diese Erläuterung ist nicht so zu verstehen, dass sie den Schutzbereich der Patentansprüche einschränkt.

Es zeigen:
- Fig. 1: eine Seitenansicht eines Tubenrohlings,
- Fig. 2: einen Längsschnitt durch den Tubenrohling,
- Fig. 3: einen Schnitt entlang der Linie III-III von Figur 1,
- Fign. 4-10: verschiedene Phasen des Spritzgießvorgangs zur Herstellung des Tubenrohlings, wobei die Figuren 5a und 6a vergrößerte Einzeldarstellungen der in den Figuren 5 und 6 umkreisten Bereiche zeigen,
- Fig. 11: einen Längsschnitt durch eine andere Ausführungsform der Spritzgießform, und
- Fig. 11a: eine vergrößerte Darstellung des in Figur 11 umkreisten Bereiches.

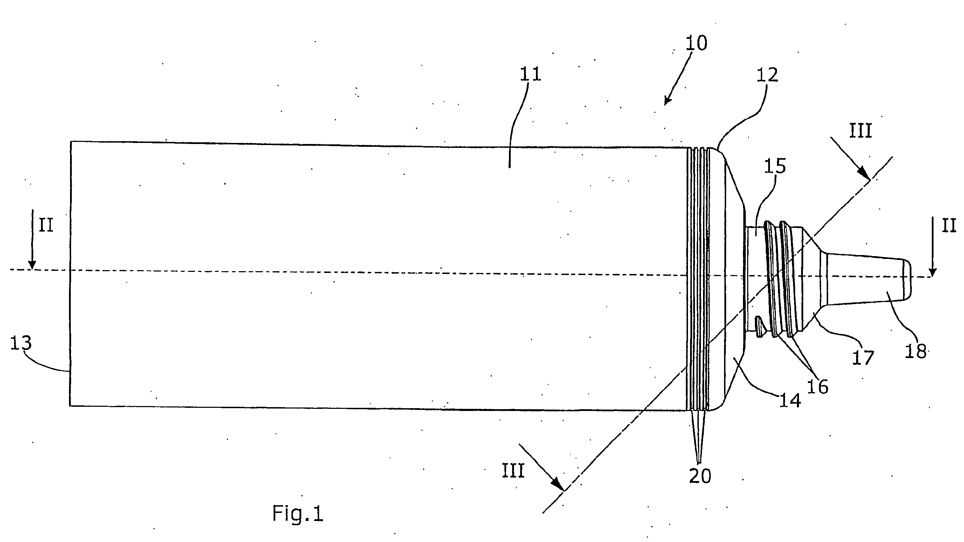

Der in den Figuren 1-3 dargestellte Tubenrohling 10 weist einen generell zylindrischen Tubenkörper 11 auf, dessen vorderes Ende mit 12 und dessen offenes rückwärtiges Ende mit 13 bezeichnet ist. An das vordere Ende 12 schließt sich die kegelstumpfförmige Tubenschulter 14 an. Von der Tubenschulter 14 steht ein Gewindeabschnitt 15 ab, dem ein Außengewinde 16 angeformt ist. Der Gewindeabschnitt 15 geht in einen kegelstumpfförmigen Übergangsbereich 17 über, an den sich der Tubenauslass 18 anschließt. Der Tubenauslass 18 ist hier mit einer geschlossenen Endwand 19 dargestellt. Diese kann beim Öffnen der Tube abgeschnitten oder durchstochen werden.

Im Bereich des vorderen Endes 12 sind an der Außenseite des Tubenkörpers 11 Rillen 20 vorgesehen, die dazu dienen, den Tubenkörper an der Kopfform festzuhalten, während der Kern und die Hohlform zurückgezogen werden. Ist der Hinterschnitt der Tubenschulter 14 mit einem angeformten Außengewinde 16 oder mit vergleichbaren Haltekrallen ausgestattet, so wäre es auch denkbar, ohne Rillen 20 den Tubenrohling 10 vorne in der Kopfform festzuhalten.

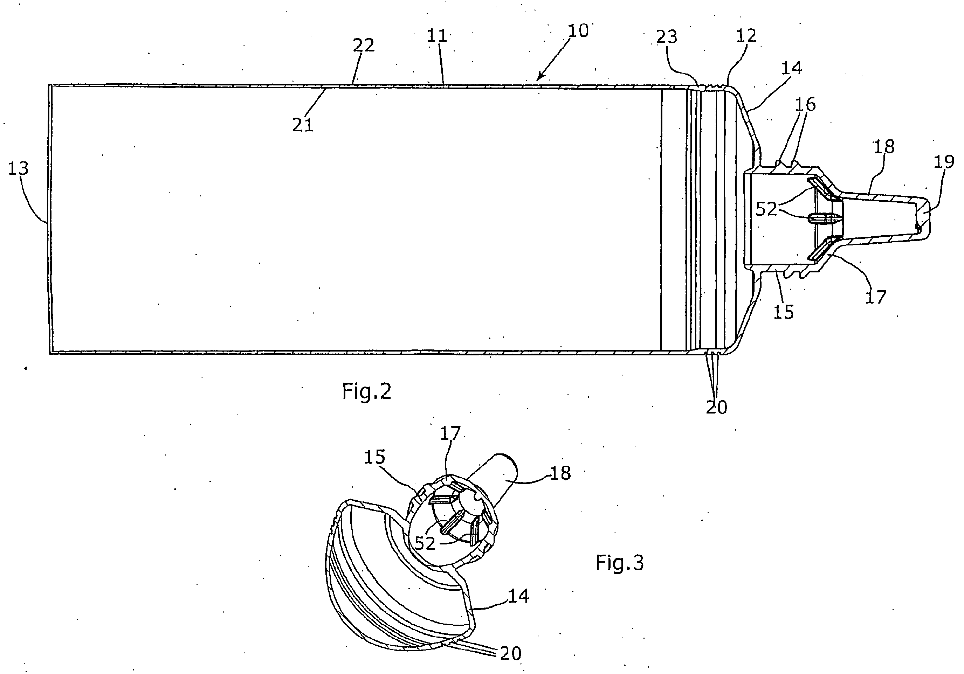

Wie Figur 2 zeigt, sind die Innenfläche 21 und die Außenfläche 22 nicht exakt parallel zueinander und auch nicht exakt zylindrisch. Vielmehr erweitert sich der Durchmesser der Innenfläche 21 von dem vorderen Ende 12 zum hinteren Ende 13 und der Durchmesser der Außenfläche 22 vergrößert sich vom hinteren Ende 13 zum vorderen Ende 12. Dabei ist die Entformungsschräge der Außenfläche 22 größer als diejenige der Innenfläche 21.

Figur 3 zeigt den Innenbereich des Tubenkopfes mit Tubenschulter 14 und Tubenauslass 18. Im Übergangsbereich 17 sind mehrere kleine Rippen 52 erkennbar, welche während der Einspritzphase zur Formfüllung genutzt wurden. Diese Rippen 52 können sowohl außen als auch innen an dem Übergangsbereich der Tube angeordnet sein.

Der Tubenrohling 10 besteht aus einem einstückigen Teil aus einem weichelastischen Kunststoff, vorzugsweise aus PE oder PP. Der Tubenkörper 11 wird am rückwärtigen Ende 13 nach der Befüllung flachgedrückt und versiegelt. Das Material des Tubenrohlings ist so weich und hat eine so geringe Wanddicke, dass es mit den Fingern einer Hand zusammengedrückt werden kann, um den Tubeninhalt durch den Tubenauslass 18 auszupressen. Auch im Bereich der Tubenschulter 14 kann das Material von entsprechender Verformbarkeit sein. Lediglich im Bereich des Gewindeabschnitts 15 und im Bereich des Tubenauslasses 18 ist die Materialdicke so groß, dass hier eine gewisse Steifigkeit vorliegt. Im Bereich der Rillen 20 ist die Wanddicke ebenfalls so groß, dass eine hinreichende Formstabilität zur Entformung vorliegt. Anschließend an den Bereich der Rillen 20 ist ein Änderungsbereich 23 vorgesehen, in dem die Wanddicke sich verringert, so dass der Hauptteil des Tubenkörpers 11 leicht zusammendrückbar oder flexibel ist. Die größere Wanddicke im Bereich der Rillen 20 bewirkt, dass der Innendurchmesser des Tubenkörpers im Bereich der Rillen 20 kleiner ist als im Hauptteil des Tubenkörpers. Bei starren Kartuschen, in denen ein Kolben verschiebbar ist, ist eine derartige Wanddickenänderung nicht möglich, weil dadurch der Kolbenweg blockiert würde.

Das Tubenmaterial gehört zu den weicheren Produkttypen der Verpackungsmaterialien auf PE- oder PP-Basis mit einem E-Modul von unter 750 MPa (750 N/mm²), insbesondere mit einem E-Modul von unter 450 Mpa (450 N/mm²). Der Tubenkörper bildet einen Quetschkörper (soft tube oder squeeze tube). Je nach Position und Entformungsschräge im Verlauf der Länge des Tubenkörpers beträgt die Wanddicke im Hauptteil des Tubenkörpers 11 vorzugsweise 0,4 bis 0,9 mm.

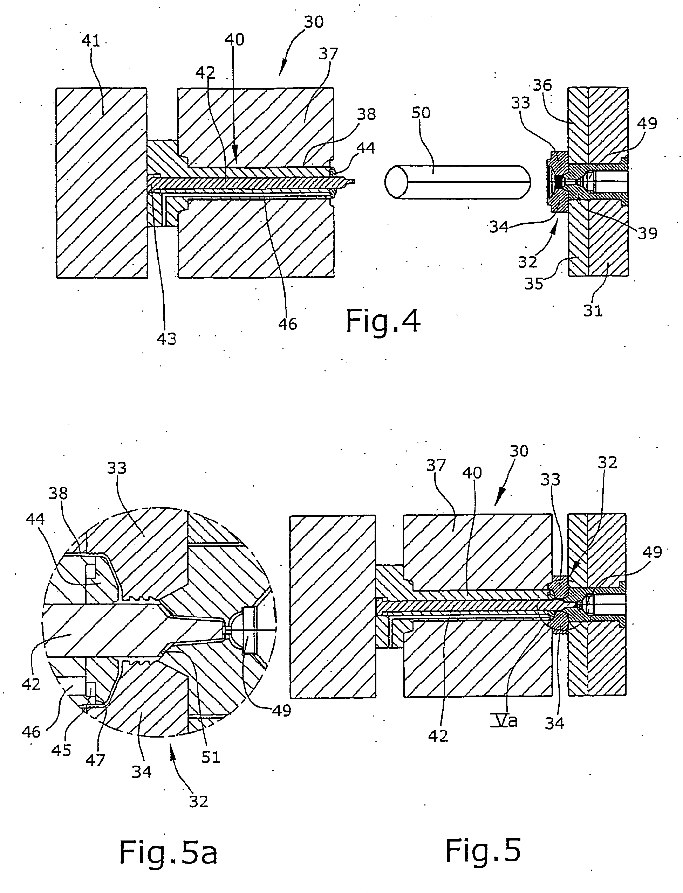

Figur 4 zeigt die Spritzgießform 30 zur Herstellung des Tubenrohlings 10. Sie weist eine im Wesentlichen plattenförmige Kopfform 32 auf, die über eine Halteplatte 31 mit der Spritzgießmaschine verbunden ist und aus zwei in einer gemeinsamen Ebene relativ zueinander verschiebbaren Backen 33,34 und einem Zentriereinsatz 39 besteht. Die Backen bilden denjenigen Teil des Formhohlraums, der den vorderen Bereich des Tubenrohlings formt. Die Backen 33,34 sind an Tragplatten 35,36 befestigt und relativ zu der Kopfform 32 nach außen bewegbar. Die Tragplatten sind an der Halteplatte 31 axial verschiebbar montiert. Die Tragplatten 35,36 und die Halteplatte 31 bilden einen Durchlass für eine in den Zentriereinsatz 39 eingesetzte Injektionsdüse 49, durch welche der flüssige Kunststoff zuerst in denjenigen Teil des Formhohlraums injiziert wird, der später die Endwand 19 (Figur 2) bildet, also in das äußerste vordere Ende des Tubenrohlings 10.

Der rohrförmige Teil des Tubenrohlings 10 wird von der Hohlform 37 geformt, die einen im wesentlichen zylindrischen Formkanal bildet, welcher die äußere Begrenzung des Formhohlraums 38 darstellt. In das rückwärtige Ende der Hohlform 37 taucht der Kern 40 als innere Begrenzung des Formhohlraums 38 ein. Der Kern 40 ist an einem Kernhalter 41 befestigt und er enthält in einer Längsbohrung einen Innenkern 42, der unter Steuerung durch einen Kolben 43 axial bewegbar ist.

Das vordere Ende des Kernes 40 wird von einer Kappe 44 gebildet, welche die Innenseite der Tubenschulter 14 formt. Die Rückseite der Kappe 44 begrenzt einen ringförmigen Luftkanal 45 (Figur 5a), in den eine durch den Kern 40 verlaufende Blasleitung 46 mündet. Der Luftkanal 45 ist über einen Spalt 47 mit dem Formhohlraum 38 verbunden. Dieser Spalt 47 ist so schmal, dass er Luft in den Formhohlraum 38 durchlässt, von Kunststoffschmelze aber nicht passiert werden kann.

Figur 4 zeigt den Zustand, in dem die Hohlform 37 und der Kern 40 beide von der Kopfform 32 zurückgezogen sind und die Form somit geöffnet ist. Von dem Formhohlraum 38 wird ein zu einem Zylinder gerolltes Blatt 50 aufgenommen. Das Blatt 50 kann ein Etikett sein, das eine Bedruckung oder ein Dekor oder eine Struktur aufweist. Möglich ist auch ein Material mit gezielt besseren Barriereeigenschaften gegen Gase oder Wasserdampf als der Grundwerkstoff der Tube besitzt. Oder die chemische Beständigkeit des Blattes oder die Oberflächen-Gleiteigenschaften sind gezielt auf die Produkt- bzw. Prozessanforderugen einsetzbar. Das Blatt 50 wird in den herzustellenden Tubenrohling integriert, d.h. es wird von dem Kunststoff umspritzt bzw. hinterspritzt und wird ein integraler Bestandteil der Tube. Nachdem das Blatt 50 in den Formhohlraum 38 eingebracht wurde, wird die Form 30 gemäß Figur 5 geschlossen, indem die Hohlform 37 mit dem darin positionierten Kern 40 bis an die Backen 33,34 der Kopfform 32 herangefahren werden.

Durch den Kern 40 erstreckt sich der Innenkern 42, der relativ zu dem Kern 40 axial bewegbar ist und aus dem vorderen Ende der Kappe 44 heraus vorsteht. Der Innenkern 42 formt die Innenseite des Tubenmundstücks.

In Figur 5 befindet sich der Innenkern 42 in der ersten Einspritzphase in seiner vorderen Endstellung. Gemäß Figur 5a sind an dem vorderen Ende des Innenkerns 42, das den Übergangsbereich 17 und den Tubenauslass 18 (Figuren 1 und 2) formt, Stege 51 angeordnet, zwischen denen Durchlässe für den flüssigen Kunststoff bestehen. Die Stege 51 stoßen gegen einen Innenkonus der zugehörigen Formaußenwand. Bei einer alternativen Ausführungsform sind die Stege nicht am Innenkern 42, sondern am Innenkonus vom Zentriereinsatz 39 angeformt.

In dem in Figur 5 dargestellten Zustand wird in einer ersten Einspritzphase aus der Injektionsdüse 49 flüssiger Kunststoff in die Spritzgießform injiziert. Dabei formen die Backen 33 und 34 den Gewindeabschnitt 15 und den Bereich der Tubenschulter 14 einschließlich der Rillen 20 (Figuren 1-3).

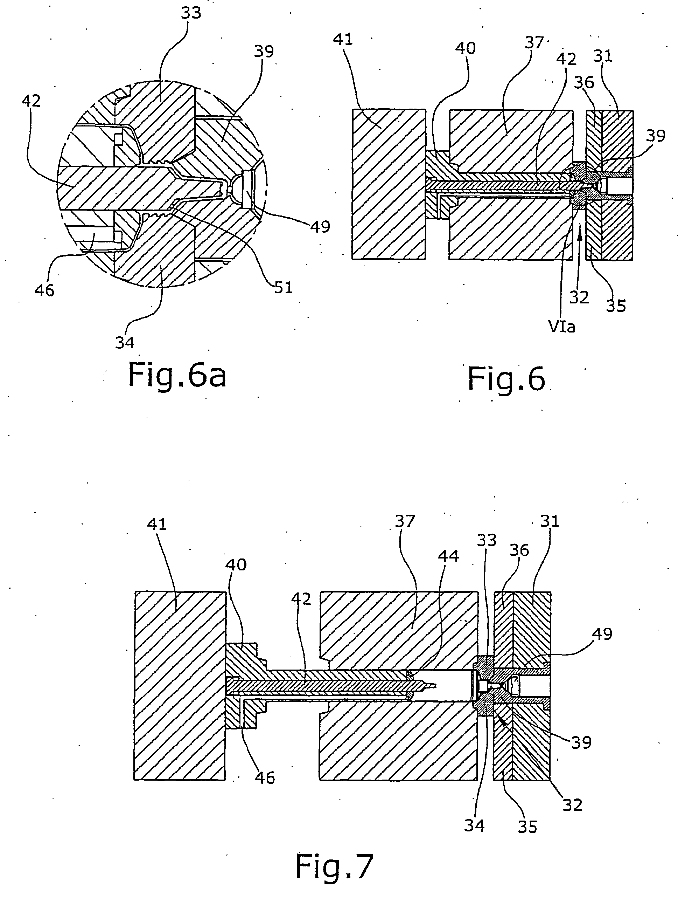

Nach Beendigung der ersten Einspritzphase wird der Innenkern 42 zurückbewegt, so dass die Stege 51 nicht mehr gegen den Fangkonus des Zentriereinsatzes 39 stoßen, sondern einen Abstand von diesem haben, wie in den Figuren 6 und 6a dargestellt ist. Dadurch werden in einer Nachfüllphase die bisher von den Stegen 51 freigehaltenen Bereiche mit Kunststoffschmelze verschlossen.

Das Einspritzen der Kunststoffschmelze bei der einstückigen Herstellung von Tuben in dem erfindungsgemäßen Spritzgießverfahren erfolgt mit Spritzdrücken von weit über 1.000 bar, bei manchen Materialien und Tubengeometrien sogar über 2.000 bar.

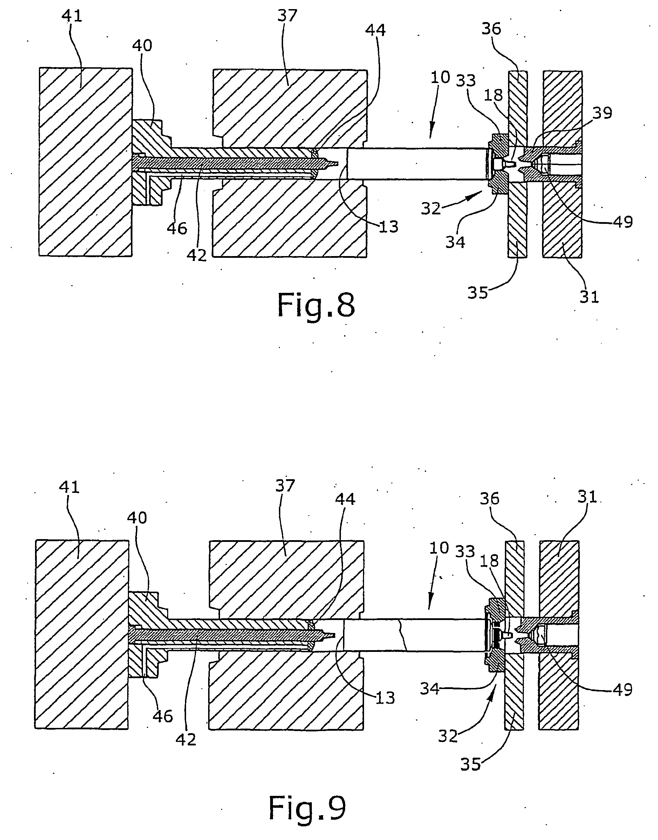

Figur 7 zeigt die erste Entformungsbewegung, bei der der Kern 40 aus der Hohlform 37 herausgezogen wird. In Figur 8 ist dargestellt, wie schließlich auch die Hohlform 37 zurückgezogen wird. Der Kern 40 hat hier den Tubenrohling 10 bereits verlassen, jedoch ist das rückwärtige Ende 13 des Tubenrohlings noch in der Hohlform 37 enthalten. Gleichzeitig werden die Tragplatten 35,36 zusammen mit den Backen 33,34 von der Halteplatte 31 fortbewegt, so dass der Tubenauslass 18 des Tubenrohlings von dem Zentriereinsatz 39 freikommt. Der Tubenrohling 10 wird von den Backen 33,34, die in die Rillen 20 und das Gewinde 16 eintauchen, festgehalten.

Figur 9 zeigt den Beginn des Öffnens der Backen 33,34 zur Freigabe des vorderen Endes des Tubenrohlings. Dieser befindet sich an dem rückwärtigen Ende noch zum Teil in der Hohlform 37. Durch Einleiten von Luft in den Formhohlraum kann der Tubenrohling vom rückwärtigen Ende 13 her entformt werden, falls er bereits durch das Öffnen der Backen aus der Kopfform entlassen worden ist.

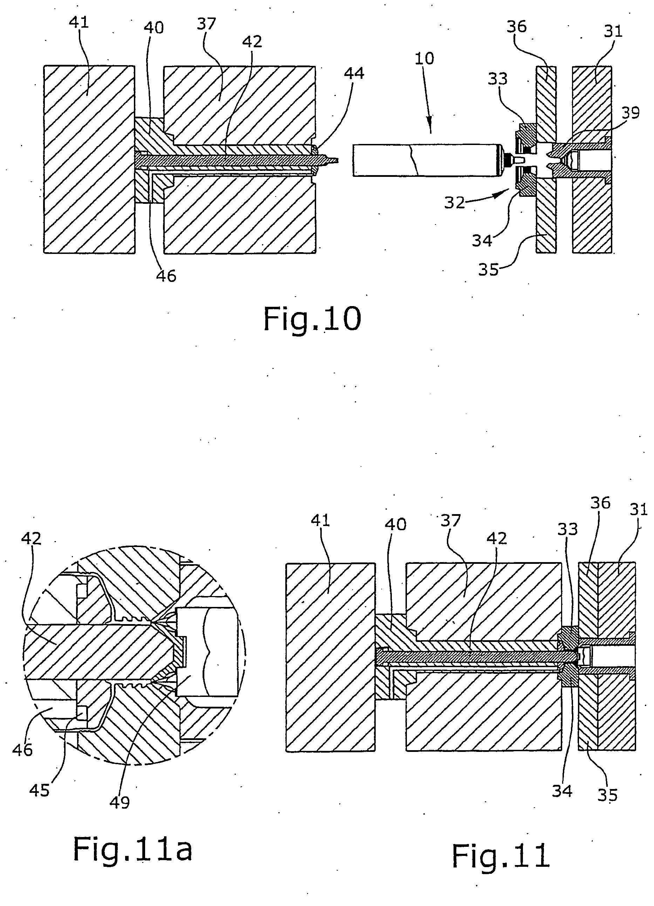

Figur 10 zeigt das Freigeben des Tubenrohlings 10 bei zurückgezogenem Kern und zurückgezogener Hohlform, wobei der Tubenrohling durch das Öffnen der Backen 33,34 aus der Kopfform herausfällt.

Durch die Luftzufuhr wird das Tubenmaterial während des Abkühlens und auch während des Entformens von dem Kern 40 fortgedrückt. Dadurch wird ein Ankleben des Kunststoffs an dem Kern reduziert.

Nach dem Herstellen des Tubenrohlings wird dieser an seinem rückwärtigen Ende 13 flachgedrückt und versiegelt, wodurch die Tube fertiggestellt wird. Das Befüllen kann vor dem Flachdrücken und Versiegeln im offenen Zustand durch das rückwärtige Ende 13 hindurch erfolgen.

Bei dem Ausführungsbeispiel der Figuren 11 und 11a erfolgt das Spritzen der Tube durch Injizieren des Kunststoffs in den Bereich des Tubenauslasses, den Gewindeabschnitt oder, wie nicht dargestellt, den Bereich der Tubenschulter 14. In jedem Fall erfolgt das Injizieren in einen offenen Hohlraum der Tubengeometrie, wobei keine Stege zum Abstützen und Zentrieren des Innenkernes 42 vorgesehen sind und der Einspritzvorgang in einem Zuge erfolgt, also nicht in eine Einspritzphase und eine Nachfüllphase mit Füllen vorher freigehaltener Stege unterteilt sein muss. Die Injektionsdüse 49 ist in diesem Fall beispielsweise eine ringförmige Düse oder sie besteht vorzugsweise aus mehreren entlang eines Kreises angeordneten Einzeldüsen.

Die Wanddicke der Tube ist im Bereich des Tubenkörpers kleiner als 1 mm, so dass die Tube quetschbar ist.

## Patentansprüche

1. Verfahren zur Herstellung einer Tube mit zusammendrückbarer Umfangswand aus Weichkunststoff mit einem E-Modul von unter 750 MPa, insbesondere mit einem E-Modul von unter 450 MPa, mit den Schritten
- einstückiges Spritzgießen eines Tubenrohlings (10) mit Tubenkörper (11), Tubenschulter (14) und Tubenauslass (18) unter Verwendung einer Hohlform (37), eines Kernes (40) und einer Kopfform (32),
- Entformen des Tubenrohlings (10) durch Herausziehen des Kernes (40) unter Festhalten des Tubenrohlings an der Kopfform (32), und Zurückziehen der Hohlform (37),
- Freigeben des Tubenrohlings (10) durch die Kopfform (32),
- Flachdrücken und Verschließen des offenen Endes (13) des Tubenkörpers (11).

2. Verfahren nach Anspruch 1, **dadurch gekennzeichnet, dass** zwischen den Kern (40) und die Hohlform (37) ein Blatt oder eine Hülse (50) eingelegt und zur Anlage an dem Kern (40) oder der Hohlform (37) gebracht wird.

3. Verfahren nach Anspruch 1 oder 2, **dadurch gekennzeichnet, dass** zwischen Kern (40) und Kopfform (32) ein Blatt eingelegt und zur Anlage an den Kern (40) oder der Kopfform (32) gebracht wird.

4. Verfahren nach einem der Ansprüche 1-3, **dadurch gekennzeichnet, dass** durch eine Blasleitung (46) des Kernes (40) Luft zwischen den Tubenrohling (10) und den Kern (40) zur Verminderung des Anklebens am Kern geleitet wird.

5. Verfahren nach einem der Ansprüche 1-4, **dadurch gekennzeichnet, dass** eine Entformungsschräge der Hohlform (37) größer gemacht wird als eine Entformungsschräge des Kernes (40).

6. Verfahren nach einem der Ansprüche 1-5, **dadurch gekennzeichnet, dass** die Hohlform (37) oder der Kern (40) mit einer Gleitbeschichtung versehen wird.

7. Verfahren nach Anspruch 2 oder 3, **dadurch gekennzeichnet, dass** das Blatt oder die Hülse (50) aus einem für Dampf, Gas oder Lösungsmittel undurchlässigen Material besteht.

8. Verfahren nach Anspruch 2 oder 3, **dadurch gekennzeichnet, dass** das Blatt oder die Hülse (50) ein bedrucktes Etikett oder Dekorblatt aufweist.

9. Verfahren nach Anspruch 2 oder 3, **dadurch gekennzeichnet, dass** das Blatt oder die Hülse aus einem plastisch verformbaren Material besteht, welches dem Rückstellvermögen des Weichkunststoffs entgegenwirkt.

10. Verfahren nach einem der Ansprüche 1-9, **dadurch gekennzeichnet, dass** der Kern (40) oder ein Teil davon während mindestens eines Teiles der Einspritzphase an der Kopfform (32) abgestützt wird.

11. Verfahren nach einem der Ansprüche 1-10, **dadurch gekennzeichnet, dass** in einer ersten Einspritzphase der Kern (40) oder ein Teil davon an der Kopfform (32) in einem Zentrierbereich zwischen Tubenschulter (14) und Tubenauslass (18) durch konisch zentrierende Stege (51) abgestützt wird und in einer Nachfüllphase der Kern (40) oder ein Teil davon von dem Zentrierbereich entfernt gehalten wird, um die während der Einspritzphase von den Stegen (51) freigehaltenen Bereiche nachzufüllen.

## Claims

1. Method for producing a tube with a compressible peripheral wall of soft plastic material having an E modulus of less than 750 MPa, in particular an E modulus of less than 450 MPa, comprising the steps of
- injection molding of an integral unfinished tube (10) comprising a tube body (11), a tube shoulder (14) and a tube outlet (18) using a female die (37), a core (40) and a neck mold (32),
- demolding the unfinished tube (10) by withdrawing the core (40) while retaining the unfinished tube in the neck mold (32), and withdrawing the female die (37),
- releasing the unfinished tube (10) from the neck mold (32),
- flattening and closing the open end (13) of the tube body (11).

2. The method of claim 1, **characterized in that** a sheet or a sleeve (50) is placed between the core (40) and the female die (37) and caused to contact the core (40) or the female die (37).

3. The method of claim 1 or 2, **characterized in that** a sheet is placed between the core (40) and the neck mold (32) and caused to contact the core (40) or the neck mold (32).

4. The method of one of claims 1-3, **characterized in that** air is supplied through a blow line (46) of the core (40) to between the unfinished tube (10) and the core (40) to reduce adhesion to the core.

5. The method of one of claims 1-4, **characterized in that** a demolding bevel of the female die (37) is made larger than a demolding bevel of the core (40).

6. The method of one of claims 1-5, **characterized in that** the female die (37) or the core (40) is provided with a slide coating.

7. The method of claim 2 or 3, **characterized in that** the sheet or the sleeve (50) is made of a material impermeable to vapor, gas or solvent.

8. The method of claim 2 or 3, **characterized in that** the sheet or the sleeve (50) comprises a printed label or a decorative sheet.

9. The method of claim 2 or 3, **characterized in that** the sheet or the sleeve is made from a plastically deformable material that counteracts the restoring property of the soft plastic material.

10. The method of one of claims 1-9, **characterized in that** the core (40) or a part thereof is supported at the neck mold (32) during at least a part of the injection phase.

11. The method of one of claims 1-10, **characterized in that**, in a first injection phase, conically centering webs (51) support the core (40) or a part thereof at the neck mold (32) in a centering portion between the tube shoulder (14) and the tube outlet (18), and, in a fill-up phase, the core (40) or a part thereof is held spaced from the centering portion to fill the portions held free by the webs (51) during the injection phase.

## Revendications

1. Procédé de fabrication d'un tube avec une paroi périphérique compressible de matière plastique souple ayant un module d'élasticité inférieur à 750 MPa, en particulier ayant un module d'élasticité inférieur à 450 MPa, le procédé comprenant les étapes suivantes:
- moulage par injection d'un tube ébauche (10) intégral comprenant un corps de tube (11), une épaule de tube (14) et une sortie de tube (18), utilisant un moule creux (37), un noyau (40) et un moule de tête (32),
- démoulage du tube ébauche (10) par extraction du noyau (40), retenant le tube ébauche par le moule de tête (32) et retirant le moule creux (37),
- libérer le tube ébauche (10) du moule de tête (32),
- raplatir et fermer l'extrémité ouverte (13) du corps de tube (11).

2. Procédé selon la revendication 1, **caractérisé en ce qu'**une feuille ou une douille (50) est mise entre le noyau (40) et le moule creux (37) et est mise en appui sur le noyau (40) ou le moule creux (37).

3. Procédé selon la revendication 1 ou 2, **caractérisé en ce que** une feuille ou une douille est mise entre le noyau (40) et le moule de tête (32) et est mise en appui sur le noyau (40) ou le moule de tête (32).

4. Procédé selon l'une quelconque des revendications 1-3, **caractérisé en ce que** l'on amène de l'air entre le tube ébauche (10) et le noyau (40) à travers un conduit de soufflage (46) du noyau (40), afin de réduire l'adhésion au noyau.

5. Procédé selon l'une quelconque des revendications 1-4, **caractérisé en ce qu'**une pente de démoulage du moule creux (37) est plus grande qu'une pente de démoulage du noyau (40).

6. Procédé selon l'une quelconque des revendications 1-5, **caractérisé en ce que** le moule creux (37) ou le noyau (40) est prévu d'un recouvrement de glissement.

7. Procédé selon la revendication 2 ou 3, **caractérisé en ce que** la feuille ou la douille (50) est formée d'un matériau imperméable au vapeur, au gaz ou aux solvants.

8. Procédé selon la revendication 2 ou 3, **caractérisé en ce que** la feuille ou la douille (50) comprend une étiquette imprimée ou une feuille décorative.

9. Procédé selon la revendication 2 ou 3, **caractérisé en ce que** la feuille ou la douille est formée d'un matériau déformable plastiquement entravant la résilience de la matière plastique souple.

10. Procédé selon l'une quelconque des revendications 1-9, **caractérisé en ce que** le noyau (40) ou une partie du même est supporté au moule de tête (32) pendant au moins une partie de la phase d'injection.

11. Procédé selon l'une quelconque des revendications 1-10, **caractérisé en ce que**, dans une première phase d'injection, le noyau (40) ou une partie du même est supporté au moule de tête (32) dans une zone de centrage entre l'épaule de tube (14) et la sortie de tube (18) par des âmes centrant conique (51), et que, dans une phase de remplissage, le noyau (40) ou une partie du même est tenu écarté de la zone de centrage afin de remplir les régions retenues libres par les âmes (51) pendant la phase d'injection.
